## Europäisches Patentamt
## European Patent Office
## Office européen des brevets

(19)

(11) Numéro de publication: **0 098 226
B1**

(12) # FASCICULE DE BREVET EUROPEEN

(45) Date de publication du fascicule du brevet:
07.01.87

(51) Int. Cl.⁴: **H 04 N 7/04,** H 04 N 7/16

(21) Numéro de dépôt: **83401355.9**

(22) Date de dépôt: **30.06.83**

(54) Réseau de télédistribution câblé.

(30) Priorité: **30.06.82 FR 8211643**

(43) Date de publication de la demande:
**11.01.84 Bulletin 84/2**

(45) Mention de la délivrance du brevet:
**07.01.87 Bulletin 87/2**

(84) Etats contractants désignés:
**AT BE CH DE FR GB IT LI LU NL SE**

(56) Documents cités:
**EP - A - 0 019 287
WO - A - 81/02961
FR - A - 2 463 995**

**IEE TRANSACTIONS ON COMMUNICATIONS, vol.
COM-23, no. 1, Janvier 1975, pages 78-88, New York,
USA: I. T. FRISCH: "Technical Problems in nationwide
networking and interconnection"
IEEE TRANSACTIONS ON CONSUMER ELECTRONICS,
vol. CE-25, no. 3, juillet 1979, pages 256-268, IEEE, New
York, USA. H. G. BOWN et al.: "Telidon: A new approach
to vidoetext system design"**

(73) Titulaire: **VISIODIS S.A., 170 Quai de Clichy,
F-92110 Clichy (FR)**

(72) Inventeur: **Lecomte, Jacques, 15, rue Fournier,
F-92110 Clichy (FR)**

(74) Mandataire: **Weinmiller, Jürgen et al, Lennéstrasse 9,
D-8133 Feldafing (DE)**

## Description

La présente invention concerne les réseaux de télédistribution câblés et notamment les réseaux câblés de type intéractif.

Les réseaux de télédistribution câblés classiques ont généralement une structure soit arborescente soit étoilée qui leur permet d'assurer la distribution en circuit fermé d'informations audiovisuelles à des utilisateurs, identifiés, par l'intermédiaire de liaisons physiques telles que des câbles coaxiaux ou des fibres optiques sur des canaux desquelles les informations sont transmises. Le nombre de canaux transmissibles simultanément par une même liaison est classiquement limité et un choix des programmes simultanément transmis vers un abonné doit donc être effectué. Un tel réseau est notamment décrit dans le document WO-A 8 102 961 prévoyant un système de commande de réseau cablé qui commande l'envoi de programmes télévisés et de signaux de données depuis une station centrale, vers des équipements utilisateurs dotés de convertisseurs intelligents qui utilisent les données pour contrôler l'accès du terminal aux programmes.

Dans ce système, comme dans la plupart des systèmes connus, la sélection par un abonné du canal à observer s'effectue à l'arrivée par un sélecteur intégré ou non au téléviseur.

Dans des réseaux élaborés, afin d'augmenter les possibilités en nombre de programmes mis à la disposition des utilisateurs, notamment par la mise à disposition de vidéothèques importantes, on ne transmet vers l'utilisateur qu'une partie des canaux ou programmes disponibles et cet utilisateur est donc amené à faire un choix qu'il doit faire connaître à la station distributrice auquel il est relié.

Si fondamentalement l'envoi d'ordres par l'utilisateur et leur mise à exécution par la station distributrice sont simples, en fait il existe toujours certaines clauses qui conditionnent l'exécution des ordres, par exemple des clauses d'accès qui nécessitent l'intervention d'un gestionnaire.

Bien entendu les processeurs sont tout indiqués pour assurer une telle gestion et différentes organisations peuvent être choisies en fonction des objectifs recherchés.

Un objet de la présente invention est la réalisation d'un réseau de télédistribution câblé dans lequel le système d'échanges entre utilisateurs et processeurs soit obtenu de manière économique tant au niveau du gestionnaire que des utilisateurs.

Le réseau de télédistribution câblé dessert une pluralité d'équipements d'abonné à partir d'une station centrale au moyen de signaux vidéo avec lesquels des paquets de données numériques sont combinés pour la transmission de signaux de service à destination des équipements d'abonné; les équipements d'abonné comportent un sous-ensemble décodeur apte à sélectionner et à restituer les paquets de données qui sont fournis par une unité de codage de la station centrale et qui concernent l'équipement d'abonné comportant le sous-ensemble décodeur considéré, chaque équipement d'abonné comporte aussi une logique de gestion qui reçoit les demandes des utilisateurs, via un agencement de commande.

Selon une caractéristique de l'invention, chaque équipement d'abonné comporte de plus un modulateur apte à émettre sur une voie retour d'une première liaison physique, par laquelle il reçoit les signaux vidéo combinés avec les paquets de données émanant de la station centrale, ledit modulateur recevant d'une part un signal porteur d'un générateur de porteuse contrôlé par un signal d'horloge reconstitué par le sous-ensemble décodeur de l'équipement d'abonné qui le comporte et d'autre part les signaux de modulation fournis par une interface de conversion à partir des signaux numériques fournis par la logique de gestion, ladite première liaison physique reliant l'équipement d'abonné considéré à une station intermédiaire, qui est reliée à la station centrale par une seconde liaison physique pour recevoir les signaux vidéo combinés avec les paquets de données que transmet cette station centrale vers les équipements d'abonnés et/ou vers elle-même, qui comporte un codeur-décodeur de paquets pour décoder les paquets de données de service la concernant et qui transmet les paquets soit vers les équipements d'abonnés qu'elle dessert, soit vers la station centrale.

D'autres caractéristiques et avantages de l'invention seront décrits en liaison avec la suite de la description et les figures ci-dessous énumérées.

La fig. 1 présente un schéma de principe d'un réseau de télédistribution câblé.

La fig. 2 présente un schéma d'un exemple de station centrale.

La fig. 3 présente un schéma d'un exemple de station intermédiaire.

La fig. 4 présente un schéma d'un exemple d'équipement d'abonné.

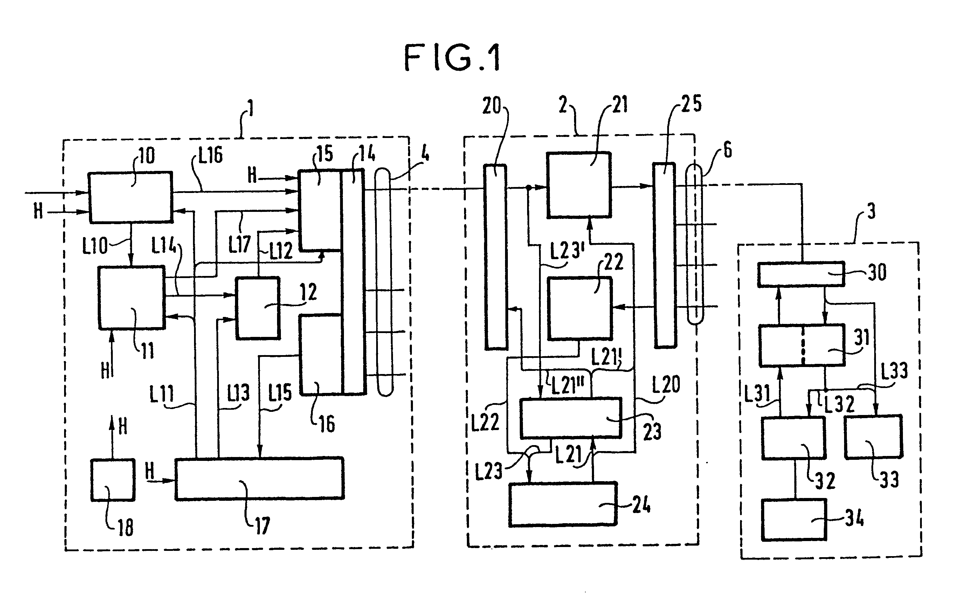

Le réseau de télédistribution câblé présenté à la figure 1 comporte classiquement une station centrale 1, reliée à plusieurs stations intermédiaires, telles que 2, qui se partagent la desserte des abonnés dotés chacun d'un équipement d'abonné approprié, tel que 3.

La station centrale 1 dispose d'une pluralité d'équipements de réception 10 ou de retransmission 11, qui lui permettent d'émettre sur le réseau câblé les différents programmes qui sont susceptibles d'être demandés par les abonnés.

Par équipement de réception 10 on entend un équipement destiné à la réception et à la mise en forme adéquate des signaux en provenance d'une source sur laquelle la station centrale 1 n'a aucun contrôle, tels par exemple les signaux reçus par voie hertzienne d'un émetteur de radiotélévision indépendant, ou les signaux reçus d'une base de données par liaison filaire.

Par équipement de retransmission 11 on entend un équipement destiné à l'émission de programmes dont la diffusion est totalement contrôlée par la station centrale, telles sont par exemple les retransmissions en différé d'émissions reçues via un équipement de réception 11, ainsi que le symbolise la liaison L10, ou encore les émissions de programme ou de messages à partir d'une vidéothèque en station centrale 10.

De manière classique les différents équipements 10, 11 d'une station centrale 1 sont connectés par des liaisons L16, L17 à une interface 14 qui les relie à des liaisons physiques 4 desservant les stations intermédiaires 2, via une unité de commutation 15 et une unité de saisie 16.

L'unité de commutation 15 assure une distributions sélective des programmes destinés à être simultanément émis vers les stations intermédiaires dans les canaux prévus en ce but sur les liaisons physiques 4, elle assure aussi une distribution sélective des signaux de service à transmettre vers les stations intermédiaires 2.

L'unité de saisie 16 est conçue pour recevoir les informations et demandes provenant des stations intermédiaires 2 sur les voies de retour des liaisons physiques 4, elle les transmet à une unité centrale de gestion 17 via une liaison L15.

L'unité centrale de gestion 17 est reliée par des liaisons de commande L11 aux équipements ou unités 10, 11, 15 et par des liaisons de transmission aux unités 15 et 16, elle permet la gestion du réseau de fonction des possibilités et des besoins et elle est classiquement organisée autour d'au moins un processeur.

Cette partie de la gestion ne sera pas décrite plus avant dans la mesure où elle ne constitue pas l'objet de la présente invention.

Une unité de codage 12 insérée entre l'unité centrale de gestion 17, et l'unité 15 assure les nécessaires conversions permettant de transformer les signaux de service émis par l'unité centrale sur la liaison L13 en signaux transmissibles par les liaisons physiques.

Une liaison L14 permet également un éventuel codage de signaux de données provenant de l'équipement 11.

Les commandes et les comptes rendus échangés sous forme numérique via la liaison L11 entre l'unité centrale de gestion 17, l'unité de commutation 15 et les équipements 10, 11 ne sont normalement pas convertis dans la mesure où ils ne sont pas à transmettre vers les stations intermédiaires 2.

L'interface de transmission 14 assure la nécessaire adaptation au niveau central des signaux échangés entre stations 1 et 2.

Bien entendu les différentes fréquences et signaux de temps nécessaires à l'exploitation sont fournis à partir d'un agencement de synchronisation 18 chlassique contrôlé par un oscillateur interne non représenté.

Chaque liaison physique 4 est constituée par exemple à l'aide de fibres optiques ou préférablement à l'aide d'un câble coaxial et l'interface de transmission 14 est choisie en conséquence.

Chaque station intermédiaire 2 comporte une interface de transmission 20 fonctionnellement analogue à l'interface 14.

Chaque liaison physique 4 et les interfaces 20 et 14 qui la desservent permettent en premier lieu de transmettre simultanément les signaux relatifs à plusieurs programmes par divers canaux dont certains sont attribués de manière quasi-fixe, alors que les autres sont attribuables à la demande.

En second lieu, chaque liaison et ses interfaces permettent de transmettre, notamment vers la station centrale 1, des informations relatives au fonctionnement et aux besoins des équipements situés en aval par rapport à la liaison, dans le sens station intermédiaire 2 vers station centrale 1.

En ce but dans le cas d'une liaison physique 4 par fibres optiques on prévoit au minimum une fibre pour le sens retour, alors qu'avec un câble coaxial on utilisera classiquement un canal de retour vers la station principale, les autres canaux étant utilisés pour les transmissions en sens inverse vers la station intermédiaire 2 desservie.

L'interface de transmission 20 de chaque station intermédiaire 2 est reliée à une unité de commutation intermédiaire 21 qui reçoit les signaux provenant de la liaison physique 4 associée et qui est apte à les commuter vers les différents équipements d'abonnés 3 suivant les exigence de ces derniers et les possibilités du système.

Cette unité de commutation intermédiaire 21 est commandée via une liaison L20 par une unité de gestion 24, classiquement organisée autour d'un processeur, qui assure les nécessaires commandes de commutation à partir des demandes des équipements d'abonnés 3 via des liaisons 6 et des informations de gestion fournies par la station centrale via un canal de service de la liaison 4 et les liaisons L23', L23.

Un codeur-décodeur 23 compatible avec l'unité de codage 12 et l'unité de saisie 16 est composé de deux sous-ensembles l'un codeur l'autre décodeur, il permet à l'unité de gestion 24 d'extraire les informations, venues des liaisons 4 et L23', qui la concernent et d'émettre à destination des équipements d'abonnés 3 sous la forme codée requise via les liaisons L21, L21'. L'interface de transmission 20 de chaque station intermédiaire 2 est aussi reliée à une unité de saisie intermédiaire 22 qui reçoit des signaux de demande ou d'information provenant des équipements d'abonnées 3 desservis par la station 2 considérée, ces signaux sont transmis à l'unité de gestion 24 via une liaison L22. Les signaux provenant de l'unité de gestion 24, via une liaison L21, à destination de la station centrale 1 sont transmis à l'interface 20 via le codeur-décodeur 23 et une liaison L21''.

Le codeur-décodeur 23 également inséré entre l'unité de saisie intermédiaire 22 et l'unité de gestion 24 assure les nécessaires conversions permettant à l'unité de gestion d'exploiter les signaux codés reçus de la station centrale 1 et de transmettre vers la station centrale 1 et vers les équipements d'abonné 3 sous la forme requise.

L'unité de commutation intermédiaire 21 et l'unité de saisie intermédiaire 22 d'une station intermédiaire sont également reliées à une interface d'abonnés 25 qui les relie aux équipements d'abonnés 3 par une ou des liaisons physiques d'abonné 6.

Les liaisons physiques d'abonné 6 et l'interface 25 sont pratiquement analogues aux liaisons physiques 4 et à l'interface 14 de la station centrale 1 dans leur rôle et dans leur fonctionnement. Chaque liaison physique 6 est constituée par un câble coaxial à prises multiples ou préférablement par des fibres optiques individualisées, ce qui permet soit une desserte de plusieurs équipements d'abonnés connectés en parallèle à une même liaison 6, soit une desserte individualisée de chaque équipement d'abonné par une liaison 6 selon une structure en étoile dont le centre est la station intermédiaire de desserte 2.

L'équipement d'abonné comporte usuellement une interface de transmission d'abonné 30 analogue en son principe et son fonctionnement aux interfaces déjà évoquées plus haut.

Cette interface de transmission d'abonné 30 qui est connectée à une liaison physique d'abonné 6 alimente un codeur-décodeur d'abonné 31, compatible avec le codeurdécodeur 23. Ce codeur-décodeur d'abonné 31 permet d'une part d'extraire les signaux de service et de données des signaux de programme télévisé reçus afin de diriger les premiers vers une logique de gestion 32 et les autres vers un appareillage audio-visuel 33 permettant leur conversion visuelle et/ou sonore, ainsi qu'éventuellement leur mémorisation et leur exploitation.

La logique de gestion 32, préférablement organisée autour d'un microprocesseur, est reliée à un agencement de commande 34 mis à disposition des utilisateurs d'un équipement d'abonné 3 pour leur permettre d'effectuer les indispensables opérations d'exploitation de cet équipement, et en particulier les sélections de programme et éventuellement d'éléments partiels de programme.

Dans sa forme la plus simple l'agencement de comande se réduira à un simple clavier relié par fil.

Bien entendu la taille du réseau câblé peut varier grandement et il doit être clair que pour un faible nombre d'abonnés, par exemple en phase de première installation, le réseau peut ne pas comporter les deux niveaux représentés l'un par la station centrale 1 et l'autre par les stations intermédiaires 2, ces niveaux étant alors regroupés moyennant de légères modifications.

Quelque soit la taille choisie pour le réseau, le dialogue entre l'unité centrale de gestion 17 et les équipements d'abonné 3 s'effectue par l'intermédiaire d'un système de transmission de données par paquets utilisant les possibilités inexploitées des liaisons 4 et 6.

Dans une variante préférée de réalisation, le procédé choisi qui est classiquement appelé «Didon» consiste à transmettre des données sous forme numérique, par exemple en code non retour à zéro NRZ à partir du niveau noir du signal vidéo en profitant des lignes libres de l'intervalle de suppression de trame dans les signaux d'image des programmes de télévision transmis sur les liaisons entre stations et équipements d'abonnés.

Un tel procédé est notamment décrit dans le document n° 3.80 de la publication du CCETT «Radiodiffusion et Télévision». En effet, ce procédé est déjà mis en œuvre pour la transmission de paquets de données à destination de téléviseurs par voie hertzienne. Chaque paquet comportant un préfixe d'exploitation et des octets de données à transmettre.

De ce fait il existe déjà commercialement des équipements et en particulier des codeurs-décodeurs appropriés.

De plus il existe également des décodeurs d'un système appelé Antiope qui sont destinés à être montés en aval des précédents en vue d'extraire au moins certaines des données fournies, pour affichage sélectif au gré de l'utilisateur sur écran de téléviseur, par exemple en vue de présenter des données alphanumériques provenant de banques de données.

Il est donc prévu de mettre en œuvre les procédés et les codeurs et décodeurs évoqués ci-dessus, dans les équipements du réseau de télédistribution câblé de manière à leur faire remplir d'une part leur rôle habituel et d'autre part un rôle supplémentaire pour les besoins d'exploitation propres au réseau câblé.

En ce but dans la station centrale 1, les données numériques de service ou d'information provenant respectivement de l'unité centrale de gestion 17 via la liaison L13 ou de l'équipement de retransmission 11 via la liaison L14 sont formatés, selon les standards prévus, par l'unité de codage 12 en collaboration avec l'agencement de synchronisation 18 et l'unité centrale de gestion.

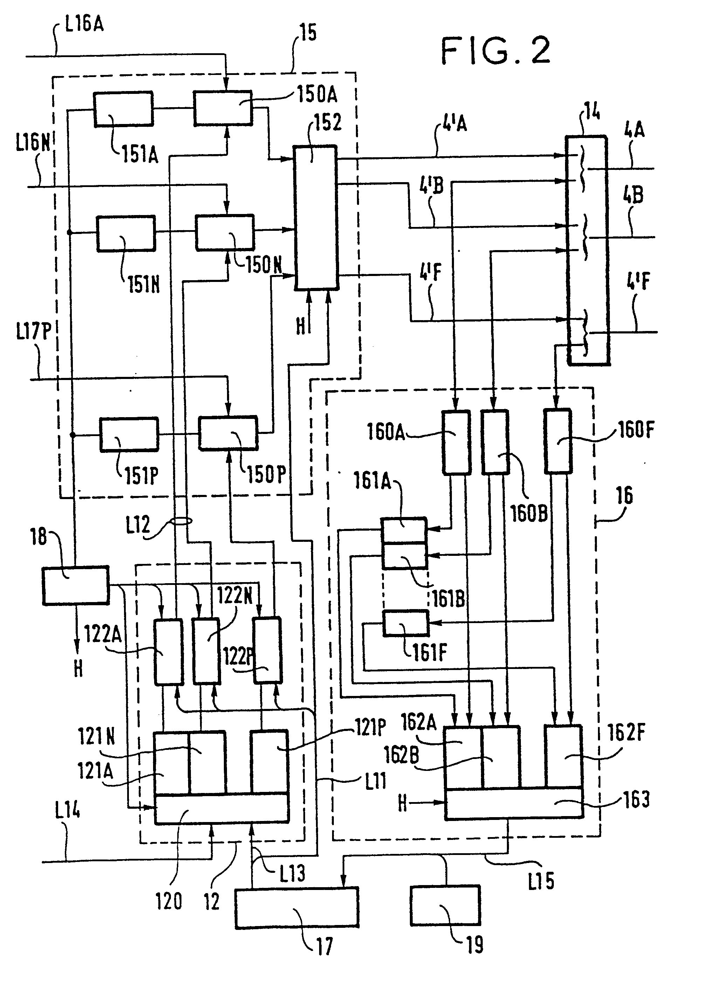

Dans une forme de réalisation présentée figure 2 l'unité de codage 12 comporte une interface tampon 120 permettant de stocker temporairement les données numériques reçues des liaisons L13, L14 avant répartition éventuelle et transfert. Au moins une unité de couplage 121, telle 121A reliée à l'interface tampon 120, assure la formation des paquets à transmettre sur un canal donné. L'unité centrale de gestion 17 fournit les données destinées à former le préfixe des paquets à partir des informations qu'elle possède concernant notamment les données repères de synchronisation, les adresses, les indications de format et de continuité.

Chaque unité de couplage 121 est associée à une unité de synchronisation 122, telle 122A, qui contrôle la transmission des données contenues dans les paquets, vers l'unité de commutation 15, au rythme fixé par l'agencement de synchronisation général 18.

Le flot de données contrôlé par chaque unité de synchronisation 122 est appliqué à une entrée de modulation d'une modulateur 150, tel 150A, de l'unité de commutation 15, ce modulateur 150 reçoit classiquement un signal de porteuse d'un générateur de porteuse 151, tel 151A, qui est soumis au contrôle de l'agencement de synchronisation 18.

Dans le cas le plus usuel où l'on emploie les lignes libres de l'intervalle de suppression de trame d'un signal télévisé pour transmettre les données issues du codeur 12, le signal issu de l'unité de synchronisation 122 vient moduler le signal de porteuse pendant les intervalles ou celui-ci n'est pas modulé par le signal télévisé reçu sur une seconde entrée de modulation, l'agencement de synchronisation 18 produisant les signaux agissant d'une part sur l'équipement 10 ou 11 émetteur et d'autre part sur l'unité de synchronisation 122 concernée pour assurer l'entrelacement choisi.

Dans l'exemple de réalisation présenté figure 2 qui correspond à un réseau comportant plusieurs stations intermédiaires 2 la station centrale comporte une pluralité de P chaines de codage composées chacune d'une unité de couplage 121, d'une unité de synchronisation 122, d'un modulateur 150 et d'un générateur de porteuse 151, de manière à permettre la transmission en simultané sur des canaux différents vers les stations intermédiaires.

On ne décrira pas ici les différentes configurations permettant d'optimiser la structure d'une station centrale en fonction des besoins et des possibilités, car ceci n'est pas l'objet de la présente invention.

Classiquement les signaux sortis des différents modulateurs peuvent être combinés dans un classique agencement commutateur 152 qui permet d'émettre les signaux correspondants à différents canaux sur au moins une même liaison 4 à partir de la station centrale par multiplexage pour chaque liaison et notamment par multiplexage en fréquence si cette liaison 4 est constituée par un câble coaxial.

On a ici représenté des liaisons unidirectionnelles 4'A, 4'C, 4'F destinées à alimenter en signaux trois liaisons 4A, 4B, 4C vers des stations intermédiaires 2 étant entendu que chaque liaison 4A peut éventuellement desservir plusieurs stations intermédiaires.

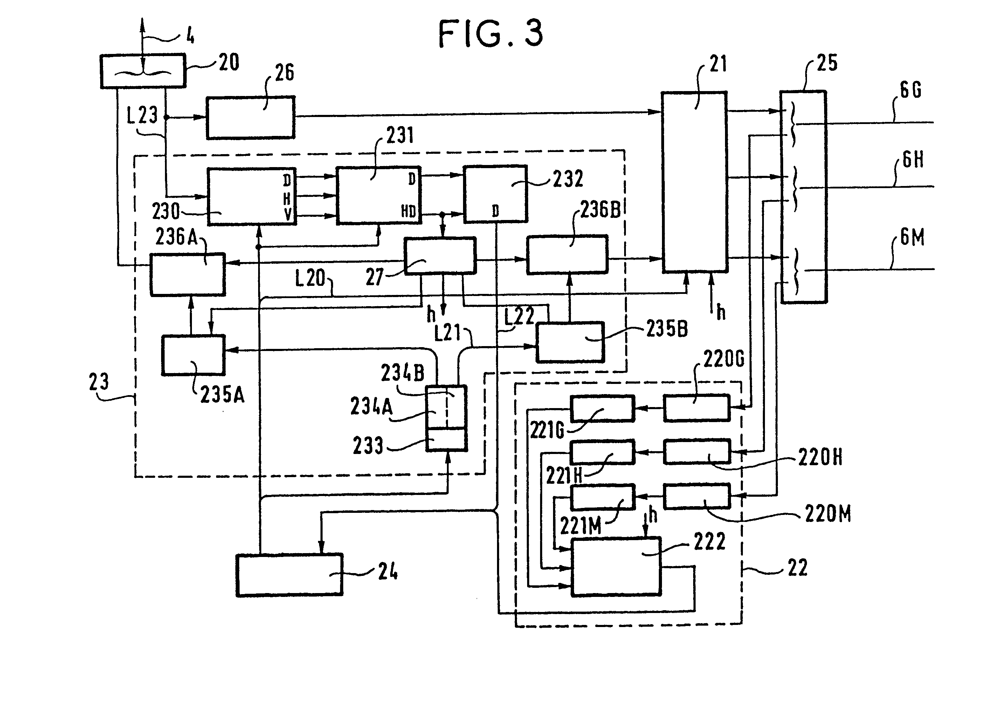

L'ensemble des signaux transmis par une liaison 4 à partir d'une station centrale 1 est appliqué à l'interface 20, dite amont, de station intermédiaire 2 qui assure sa transmission d'une part à un premier amplificateur vidéo 26 pour transmission à l'unité intermédiaire de commutation 21 (figure 3) d'autre part à un amplificateur vidéo non représenté d'un démodulateur 230 du codeur-décodeur 23, via la liaison L23.

Le démodulateur 230 assure l'extraction des données des signaux vidéo reçus, il fournit classiquement les données numériques (D) en série avec leur horloge (H) et un signal de validation (V) permettant d'isoler les données à recevoir parmi l'ensemble des signaux transmis.

Un démultiplexeur 231 placé en sortie du démodulateur 230 assure la sélection des paquets de données qui concernent la station intermédiaire 2 qui le comporte à partir des préfixes situés en tête de ces paquets et en fonction des instructions données par l'unité de gestion, dite intermédiaire, 24 de cette station 2 via la liaison L20.

Une mémoire tampon 232 assure classiquement la mise en mémoire temporaire des paquets reçus et leur sortie au rythme prévu pour leur saisie par l'unité intermédiaire de gestion 24 à laquelle cette mémoire tampon 232 est reliée par une liaison L22.

Le signal d'horloge (HD) obtenu en sortie du démodulateur 231 est appliqué à un circuit d'horloge 27 qui fournit par multiplication, division et/ou déphasage les divers signaux de synchronisation et d'horloge nécessaires au fonctionnement de la station intermédiaire 2.

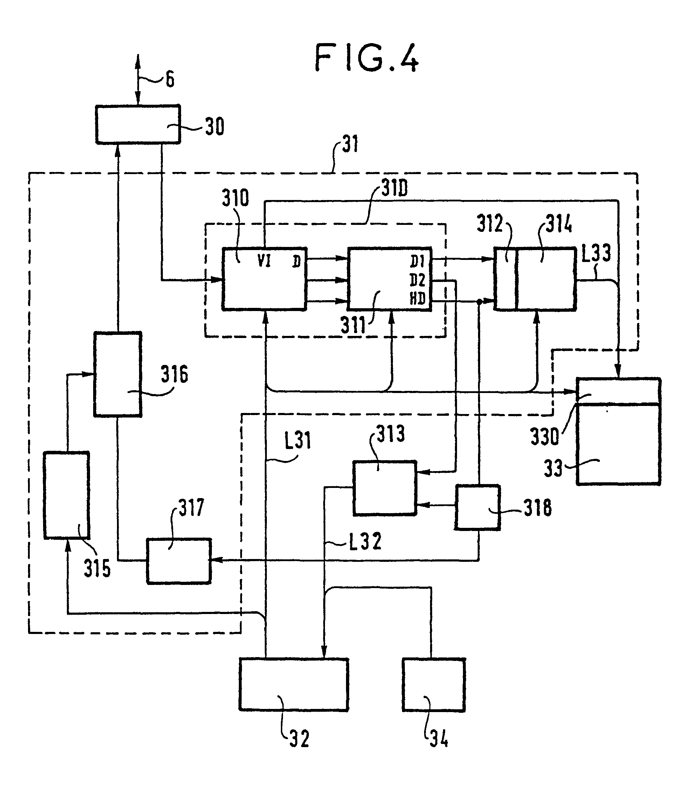

L'un des signaux fourni par ce circuit d'horloge 27 sert à produire un signal de porteuse à l'aide d'un générateur de porteuse non représenté, afin de permettre l'émission de paquets de données par la station intermédiaire à partir de données fournies par l'unité intermédiaire de gestion 24. Dans l'exemple de réalisation présenté en figure 3 de tels paquets de données sont obtenus à partir d'un codeur analogue au codeur 12 de station centrale, ce codeur comporte une interface tampon 233 associée à au moins une et préférablement deux unités de couplage 234A, 234B, alimentant deux unités de synchronisation 235A, 235B dont les sorties sont respectivement reliées aux entrées de modulation de deux modulateurs 236A, 236B alimentant l'un la liaison 4 via l'interface amont 20 et l'autre l'interface d'abonné 25 via l'unité intermédiaire de commutation 21 analogue à l'unité 15. Ceci permet donc d'envoyer des informations de service tant vers la station centrale 1 que vers les équipements d'abonné 3 à partir de l'unité intermédiaire de gestion 24. Selon le choix technologique effectué, l'unité intermédiaire de commutation alimente une ou plusieurs liaisons physiques 6 telle 6G desservant un ou plusieurs équipements d'abonnés. Selon la variante de réalisation envisagée en liaison avec la figure 4, chaque liaison 6, dessert un équipement d'abonné 3 unique, via l'interface de transmission d'abonné 30 de cet équipement 3.

De même que dans le cas de la station intermédiaire, les signaux reçus sont transmis à au moins un amplificateur vidéo, non figuré, associé à un sous-ensemble décodeur 31D en vue d'alimenter en signaux ce sous-ensemble et l'appareillage audiovisuel de l'abonné considéré c'est-à-dire au moins son téléviseur.

Le sous-ensemble décodeur 31D comporte un démodulateur 310 qui a mêmes fonctions que le démodulateur 230, dans la variante ici figurée, il intègre l'amplificateur vidéo évoqué ci-dessus et il fournit donc par une sortie VI l'ensemble des signaux de programme transmis vers l'appareillage audiovisuel 33.

Des signaux d'horloge, de données et de validation sont obtenus en sortie du démodulateur 310 et sont appliqués à un démultiplexeur 311 identique au démultiplexeur 231.

Le démultiplexeur 311 assure la sélection des paquets de données en fonction de leurs préfixes et leur aiguillage soit vers une unité de mémoire tampon 312 d'un décodeur spécialisé 314 de type Antiope, soit vers une mémoire tampon 313 desservant le processeur non figuré de la logique de gestion 32, de manière à séparer les données de service reçues des données d'informations destinées à l'utilisateur.

De manière connue en soi, la logique de gestion 32 est reliée, via une liaison L31, au démodulateur 310, au démultiplexeur 311, au décodeur 314 et à un sélecteur de canaux 330 associé à l'appareillage audiovisuel 33, de manière à les contrôler.

Dans une forme de réalisation, un utilisateur demandeur actionne le clavier de l'agencement de commande 34 de son équipement d'abonné 3, dûment sous tension. La demande transmise au clavier est analysée par la logique de gestion 32 de l'équipement 3 qui produit un message d'appel par l'intermédiaire de la partie codage du codeur-décodeur 31 de l'équipement 3.

Dans l'exemple de réalisation présenté figure 4 la logique de gestion fournit une information de type numérique à une interface de conversion 315, par exemple de type numérique-analogique, qui vient agir sur l'entrée de modulation d'un modulateur 316 recevant une porteuse via un classique générateur de porteuse 317 relié à un oscillateur 318 verrouillé par une boucle de phase sur le signal d'horloge HD issu du démultiplexeur 311. Le signal modulé produit par le modulateur 316 est transmis sur la voie retour, c'est-à-dire dans l'exemple choisi sur la fibre retour de la liaison 6, via l'interface de transmission 30. Ce signal modulé est transmis par l'interface d'abonné 25 de la station intermédiaire 2 à laquelle est reliée l'équipement d'abonné considéré, il est reçu par un démodulateur 220, tel 220G, de cette station intermédiaire qui le démodule avant de le transmettre à un convertisseur 221. Le convertisseur 221 transmet les données numériques qu'il produit, à partir des signaux reçus, à un agencement de mémoire temporaire 222, de manière à tenir ces données mémorisées à disposition de l'unité intermédiaire de gestion 24 à des fins d'exploitation et/ou de transmission vers la station centrale 1.

Sur la réalisation présentée figure 3, une pluralité de chaines de réception composées chacune d'un démodulateur 220 et d'un convertisseur 221 alimentent l'agencement mémoire 222 en parallèle, ils assurent chacun la réception d'une voie de retour différente, ici prévue provenant d'une liaison physique 6 différente et d'un équipement d'abonné 3 différent, bien que d'autres options soient envisageables.

Certaines des données fournies à une station intermédiaire 2 par les équipements d'abonné 3 qu'elle dessert, sont susceptibles d'être exploitées directement par cette station. L'unité de gestion intermédiaire 24 a accès en retour aux équipements d'abonnés desservis via le modulateur 236B du codeur 23 et l'unité intermédiaire de commutation 21. Ce sont par exemple les données demandant accès à un programme à accès libre déjà en cours de diffusion par la station intermédiaire.

D'autres données sont destinées à être transmises à la station centrale 1 et il y a intérêt à regrouper ces données pour utiliser au mieux les voies retour des liaisons physiques 4 entre stations 2 et 1.

Dans une forme de réalisation, l'unité intermédiaire de gestion 24 de chaque station intermédiaire 2 assure une éventuelle concentration des données et leur mise sous forme de paquets analogues à ceux qui transitent à l'aller entre la station centrale et les stations intermédiaires, sans que soient imposées les limitations de temps dues au mixage des données et des signaux de programme dans le sens aller. Ceci est notamment le cas pour les données de taxation collectées au niveau des stations intermédiaires et exploitées à la station centrale après transmission. Les données ainsi obtenues sont transmises sous forme de signaux modulés dans au moins un canal de voie de retour de liaison 4 telle 4A afin d'être récupérées, elles sont reçues par l'interface 14 au niveau de la station centrale 1 qui transmet les signaux provenant de chaque canal de voie de retour à un récepteur individuel 160, tel 160A pour la voie 4A.

Chaque récepteur 160 assure une remise sous forme numérique impulsionnelle des signaux reçus et alimente un circuit de reconstitution d'horloge 161, tel 161A, et une unité de reconstitution de paquets 162, telle 162A, qui reçoit aussi les signaux d'horloge produits par le circuit 161 associé, une logique câblée interne non représentée permet de reconnaître les configurations caractéristiques de données relatives aux préfixes des paquets.

Les paquets reconstitués en sortie des unités de reconstitution 162, telle 162A, sont temporairement stockés dans une interface tampon 163 afin d'être tenus à disposition de l'unité centrale de gestion qui assure la gestion du réseau câblé ainsi constitué à partir du programme enregistré qu'elle exploite, des données reçues via l'interface tampon et les liaisons qui la relient d'une manière non représentée aux équipements de réception 10 et de retransmission 11 et enfin des indications fournies par le personnel de gestion par l'intermédiaire d'un pupitre de contrôle 19 relié à l'unité de centrale gestion 17.

Dans un exemple d'exploitation, les «q» équipements d'abonnés 3 sont répartis en «g» groupes comportant chacun un nombre maximal de «p» équipements. Sachant que chaque équipement d'abonné peut avoir accès à «n» programmes, le cu les processeurs des stations interrogent cycliquement les groupes pour connaître la liste, programme par programme, des équipements demandeurs.

Un message contient la succession des codes «g/n» des groupes d'abonnés en fonction des programmes choisis et pour chaque code, les numéros «q» des abonnés, ayant fait une demande au cycle précédent.

Lorsqu'un abonné demande à recevoir un programme par actionnement d'agencement de commande 33 de son équipement d'abonné 3, la logique de commande 34 renvoie un signal caractéristique «S» de durée «t» sur la liaison 6, par exemple une fréquence porteuse, à l'apparition au niveau du codeur-décodeur 31 de l'élément de message «$g_1/n_j$» qui correspond au groupe dont fait partie ledit équipement 3 et au programme choisi.

Le signal «S» différent pour chaque abonné d'un groupe est reçu par la station auquel l'équipement 3 de cet abonné est rattaché, il est décodé et la liste des abonnés recevant le programme concerné est complétée par le code «q» du nouveau demandeur, les éléments des unités de commutation 15 et 21 éventuellement nouvellement concernées et le sélecteur de canaux 330 de l'abonné demandeur sont commandés par la combinaison $g_i/n_j/q_k$ nouvellement transmise.

Un signal «Y» est émis constamment par chaque abonné en liaison et sa réception au niveau de la station intermédiaire de rattachement 2 assure le maintien de la transmission et ouvre une possibilité de taxation à la durée. Ce signal Y est interrompu par l'utilisateur en cas d'arrêt d'écoute ou de demande de changement de programme, son arrêt occasionne une interrogation de l'équipement d'abonné concerné par un message spécifique «Z» au cas où aucune demande n'est enregistrée il permet par exemple d'informer l'utilisateur en cas de défaillance de son équipement ou de la liaison qui le dessert, par production de signaux visuels ou auditifs caractéristiques d'avarie lorsque ce message «Z» n'est pas décodé par l'équipement alors qu'il devrait l'être ou de signaux d'avertissement lorsqu'il est décodé.

**Revendications**

1. Réseau de télédistribution câblé desservant une pluralité d'équipements d'abonné (3) à partir d'une station centrale (1) au moyen de signaux vidéo, avec lesquels des paquets de données numériques sont combinés pour la transmission de signaux de service à destination des équipements d'abonné, ces équipements d'abonné comportant un sous-ensemble décodeur (31D) apte à sélectionner et à restituer les paquets de données qui sont fournis par une unité de codage (12) de la station centrale et qui concernent l'équipement d'abonné (3) comportant le sous-ensemble décodeur considéré, chaque équipement d'abonné comportant aussi une logique de gestion (32) qui reçoit les demandes des utilisateurs, via un agencement de commande (34), ledit réseau étant caractérisé en ce que chaque équipement d'abonné comporte de plus un modulateur (316) apte à émettre sur une voie retour d'une liaison physique (6) par laquelle il reçoit les signaux vidéo combinés avec les paquets de données émanant de la station centrale (1), ledit modulateur recevant d'une part un signal porteur d'un générateur de porteuse (317), contrôlé par un signal d'horloge reconstitué par le sous-ensemble décodeur (31D) de l'équipement d'abonné qui le comporte et d'autre part les signaux de modulation fournis par une interface de conversion à partir des signaux numériques fournis par la logique de gestion, ladite liaison physique (6) reliant l'équipement d'abonné considéré à une station intermédiaire (2), qui est reliée à la station centrale (1) par une liaison physique (4) pour recevoir les signaux vidéo combinés avec les paquets de données que transmet cette station centrale (1) vers les équipements d'abonnées et/ou vers elle-même, qui comporte un codeur-décodeur de paquets (23) pour décoder les paquets de données de service la concernant et qui transmet les paquets soit vers les équipements d'abonné (3) qu'elle dessert, soit vers la station centrale (1).

2. Réseau de télédistribution câblé selon la revendication 1, caractérisé en ce que l'unité de codage (12) de station centrale est alimenté en données numériques à transmettre vers les équipements d'abonnés par une unité centrale de gestion (17) qui reçoit les données numériques de gestion provenant des stations intermédiaires sous forme de paquets qui sont extraits et recueillis par une unité de saisie (16) connectée aux liaisons physiques (4) de manière à recevoir les voies retour de ces liaisons.

3. Réseau de télédistribution câblé selon la revendication 1, caractérisé en ce que l'équipement d'abonné (3) comporte un sélecteur de canaux (330), en entrée de l'appareillage audiovisuel (33), qui est contrôlé par la station intermédiaire (2) au moyen de paquets de données qui sont traités par la logique de gestion (32).

4. Réseau de télédistribution câblé selon la revendication 2, caractérisé en ce que chaque unité de saisie (16) de station intermédiaire (2) comporte au moins un démodulateur (220) pour recevoir les signaux en retour provenant d'un équipement d'abonné (2) via une liaison physique (6) et un convertisseur (221) associé à ce démodulateur pour convertir lesdits signaux reçus en signaux numériques exploitables par l'unité de gestion (24) de la station (2).

5. Réseau de télédistribution câblé selon la revendication 1, caractérisé en ce que le codeur-décodeur de paquets (31) d'une station intermédiaire 2 comporte notamment:
– un sous-ensemble décodeur constitué par un démodulateur (230) et un démultiplexeur (231) aptes à récupérer les paquets de données (D) et le signal d'horloge (HD) les concernant à partir des signaux reçus d'une liaison physique (4);
– un sous-ensemble codeur composé d'une unité de couplage (234) assurant la formation des paquets à partir des données reçues de l'unité de gestion (24) de la station intermédiaire (2) considérée ainsi que de deux unités de synchronisation (235) et de deux modulateurs (236) pour émettre séparément des paquets de données de service d'une part sur une voie de retour de liaison physique (4) à destination de la station centrale (1), d'autre part vers les équipements d'abonnées (3) desservis par ladite station intermédiaire via les liaisons physiques (6) correspondantes.

6. Réseau de télédistribution câblé selon la revendication 3, caractérisé en ce que l'unité de saisie (16) d'une station centrale (1) comporte au moins:

– un récepteur (160) assurant la remise sous forme numérique impulsionnelle des signaux reçus en retour de station-intermédiaire via une voie de liaison physique (4)

– un circuit de reconstitution d'horloge (161) relié en sortie du récepteur (160)

– une unité de reconstitution de paquets (162) reliée en sortie de chaque récepteur (160) et du circuit de reconstitution d'horloge (161) associé, de manière à reconstituer les paquets transmis sous le contrôle d'une logique câblée interne en vue du traitement par l'unité centrale de gestion 1 des données ainsi transmises.

## Patentansprüche

1. Verkabeltes Fernsehverteilungsnetz, das eine Vielzahl von Teilnehmergeräten (3) ausgehend von einer Zentralstation (1) mittels Videosignalen bedient, mit denen Pakete von digitalen Daten für die Übertragung von für die Teilnehmergeräte bestimmten Dienstsignalen kombiniert werden, wobei die Teilnehmergeräte eine Dekodier-Untereinheit (31D) aufweisen, die die Pakete von Daten auswählen und wiederherstellen kann, welche von einer Kodiereinheit (12) der Zentralstation geliefert werden und welche das Teilnehmergerät (3) betreffen, das die betreffende Dekodier-Untereinheit aufweist, wobei jedes Teilnehmergerät ausserdem eine Verwaltungslogik (32) aufweist, die über eine Steueranordnung (34) die Anfragen der Benutzer empfängt, dadurch gekennzeichnet, dass jedes Teilnehmergerät ausserdem einen Modulator (316) aufweist, der auf einer Rückleitung einer Verbindungsleitung (6), durch die er die mit den von der Zentralstation (1) kommenden Datenpaketen kombinierten Videosignale empfängt, senden kann, wobei dieser Modulator einerseits ein Trägersignal von einem Trägerfrequenzgenerator (317) zugeführt erhält, der von einem Taktsignal gesteuert wird, das von der Dekodier-Untereinheit (31D) des Teilnehmergeräts, das ihn aufweist, wiederhergestellt wird, und andererseits die von einer Wandlerschnittstelle ausgehend von durch die Verwaltungslogik gelieferten digitalen Signalen gelieferten Modulationssignale zugeführt erhält, wobei die Verbindungsleitung (6) das betrachtete Teilnehmergerät mit einer Zwischenstation (2) verbindet, die über eine Verbindungsleitung (4) mit der Zentralstation (1) verbunden ist, um die mit den Datenpaketen, die diese Zentralstation (1) zu den Teilnehmergeräten und/oder der Zwischenstation überträgt, kombinierten Videosignale zu empfangen, wobei die Zwischenstation einen Paket-Kodierer/Dekodierer (23) aufweist, um die sie betreffenden Dienst- oder Datenpakete zu dekodieren und die Pakete entweder zu den von ihr betreuten Teilnehmergeräten (3) oder zur Zentralstation (1) zu senden.

2. Verkabeltes Fernsehverteilungsnetz nach Anspruch 1, dadurch gekennzeichnet, dass die Kodiereinheit (12) der Zentralstation von einer zentralen Verwaltungseinheit (17) mit an die Teilnehmergeräte zu übertragenden Digitalen Daten versorgt wird, die die von den Zwischenstationen kommenden digitalen Verwaltungsdaten in Form von Paketen empfängt, die von einer Erfassungseinheit (16) entnommen und aufgefangen werden, die mit den Verbindungsleitungen (4) so verbunden ist, dass sie die Rückwegkanäle dieser Verbindungen empfängt.

3. Verkabeltes Fernsehverteilungsnetz nach Anspruch 1, dadurch gekennzeichnet, dass das Teilnehmergerät (3) einen Kanalwähler (330) am Eingang des audiovisuellen Apparats (33) aufweist, der von der Zwischenstation (2) mithilfe von Datenpaketen gesteuert wird, die von der Verwaltungslogik (32) verarbeitet werden.

4. Verkabeltes Fernsehverteilungsnetz nach Anspruch 2, dadurch gekennzeichnet, dass jede Erfassungseinheit (16) einer Zwischenstation (2) mindestens einen Demodulator (220), um die über eine Verbindungsleitung (6) von einem Teilnehmergerät (3) kommenden Rückwegsignale zu empfangen, und einen Wandler (221) aufweist, der zu diesem Demodulator gehört, um die empfangenen Signale in digitale Signale umzuwandeln, die von der Verwaltungseinheit (24) der Station (2) ausgewertet werden können.

5. Verkabeltes Fernsehverteilungsnetz nach Anspruch 1, dadurch gekennzeichnet, dass der Paket-Kodierer/Dekodierer (31) einer Zwischenstation (2) insbesondere aufweist:

– eine Dekodier-Untereinheit bestehend aus einem Demodulator (230) und einem Demultiplexer (231), die die sie betreffenden Datenpakete (D) und das Taktsignal (HD) ausgehend von den auf einer Verbindungsleitung (4) empfangenen Signalen zurückgewinnen können,

– eine Kodieruntereinheit bestehend aus einer Koopeleinheit (234), die die Bildung von Paketen ausgehend von der Verwaltungseinheit (24) der betroffenen Zwischenstation (2) erhaltenen Daten bewirkt, und aus zwei Synchronisationseinheiten (235) und zwei Modulatoren (236), um getrennt Dienst-Datenpakete einerseits auf einer Rückleitung einer Verbindungsleitung (4) in Richtung zur Zentralstation (1) und andererseits zu den von der Zwischenstation über die entsprechenden Verbindungsleitungen (4) bedienten Teilnehmergeräten (3) auszusenden.

6. Verkabeltes Fernsehverteilungsnetz nach Anspruch 3, dadurch gekennzeichnet, dass die Erfassungseinheit (16) einer Zentralstation (1) mindestens aufweist:

– einen Empfänger (160), der die Umformung in impulsförmige digitale Signale der auf dem Rückweg von der Zwischenstation über eine Verbindungsleitung (4) erhaltenen Signale bewirkt,

– einen Taktwiederherstellungskreis (161), der mit dem Ausgang des Empfängers (160) verbunden ist,

– eine Paketwiederherstellungseinheit (162), die an den Ausgang jedes Empfängers (160) und des zugehörigen Taktwiederherstellungskreises (161) angeschlossen ist, um die Pakete wiederherzustellen, die unter der Steuerung durch eine innere verdrahtete Logik übertragen wurden und von der zentralen Verwaltungseinheit 1 bearbeitet werden sollen.

## Claims

1. A cable TV distribution network supplying TV-signals from a central station (1) to a plurality of subscriber equipments (3), these signals being combined with blocks of digital data for the transmission of service signals towards the subscriber equipments, these subscriber equipments comprising a decoder subunit (31D) able to select and to restitute the data blocks coming from a coder unit (12) in the central station and concerning the subscriber equipment (3) including the respective decoder subunit, each subscriber equipment further comprising a management logic (32) receiving the users' requests via a control device (34), characterized in that each subscriber equipment further comprises a modulator (316) which is able to emit on a return channel of a material line (6), on which it receives the TV-signals combined with the data blocks coming from the central station (1), said modulator receiving on the one hand a carrier signal from a carrier generator (317), controlled by a clock signal which has been reconstituted by the decoder subunit (31D) of the corresponding subscriber equipment, and on the other hand the modulation signals supplied by a conversion interface on the basis of digital data supplied by the management logic, said material line (6) connecting the respective subscriber equipment to an intermediate station (2) which is connected to the central station (1) by a material line (4) in order to receive the TV-signals combined with the data blocks transmitted by this central station (1) for the destination of the subscriber equipments and/or the intermediate station itself, said intermediate station comprising a block coder/decoder (23) conceived to decode the blocks of service data concerning this station and to transmit these blocks either towards the subscriber equipment (3) which is serves, or towards the central station (1).

2. A cable TC distribution network according to claim 1, characterized in that the coder unit (12) of the central station is supplied with digital data to be transmitted from a central management unit (17) to the subscriber equipments, this unit receiving the digital management data from the intermediate stations in the form of blocks which are extracted and assembled by an entry unit (16) connected to the material line (4) in order to receive the return channels of these lines.

3. A cable TV distribution network according to claim 1, characterized in that the subscriber equipment (3) comprises a channel selector (330) at the input of the audiovisual device (33), this selector being controlled by the intermediate station (2) by blocks of data which are treated by the management logic (32).

4. A cable TV distribution network according to claim 2, characterized in that each entry unit (16) of an intermediate station (2) comprises at least one demodulator (220) for receiving the return signals coming from a subscriber equipment (2) via a material line (6), and a converter (221) associated to this demodulator for converting said received signals into digital signals which can be treated by the management unit (24) of the station (2).

5. A cable TV distribution network according to claim 1, characterized in that the block coder/decoder (31) in an intermediate station (2) substantially comprises:

– a decoder subassembly constituted by a demodulator (230) and a demultiplexer (231) conceived to recover the data blocks (D) and the respective clock signal (HD) from the signals received on a material line (4);

– a coder subassembly composed of a coupling unit (234) which assembles the blocks out of the data received from the management unit (24) of the respective intermediate station (2) as well as of two synchronisation units (235) and of two modulators (236) conceived to transmit separately service data blocks on the one hand on a return channel of the material line (4) towards the central station (1) and on the other hand towards the subscriber equipments (3) which are served by said intermediate station via the corresponding material lines (6).

6. A cable TV distribution network according to claim 3, characterized in that the entry unit (16) of a central station (1) comprises at least:

– a receiver (160) for converting into a digital notation the signals received in return from the intermediate station via a channel of the material line (4),

– a clock recovery circuit (161) connected to the output of the receiver (160),

– a block reconstitution unit (162) connected to the output of each receiver (160) and of the associated clock recovery circuit (161) in order to reconstitute the blocks transmitted under the control of a wired internal logic in view of the processing of the transmitted data by a central management unit (1).

# FIG.1

0 098 226

FIG.2

0 098 226

# FIG. 3

0 098 226

FIG.4